# EUROPEAN PATENT APPLICATION

(11) **EP 1 302 865 A1**
(43) Date of publication of application: **16.04.2003**
(21) Application number: 01308651.7
(22) Date of filing: 10.10.2001
(51) Int. Cl.: G06F 17/30

(54) **Method and apparatus for searching for and retrieving colour images**

(71) Applicant: Mitsubishi Electric Information Technology Centre Europe B.V., Guildford, Surrey GU2 5YD (GB); MITSUBISHI DENKI KABUSHIKI KAISHA, Tokyo 100-8310 (JP)
(72) Inventor: Berriss, William P., Woking, Surrey GU22 8ED (GB); Bober, Miroslaw Z., Guildford, Surrey GU21 2SE (GB)
(74) Representative: Burke, Steven David

(57) **Abstract**

A method of searching for an image or images corresponding to a query comprises comparing a colour descriptor of the query with stored colour descriptors of each of a collection of reference images, and deriving a matching value indicating the degree of matching between the query and a reference image using the query and reference descriptors, and classifying the reference images by said matching value, each colour descriptor including an indication of one or more dominant colours within the corresponding query or reference image, wherein at least one of the query descriptor and a reference descriptor indicates two or more dominant colours, so that the corresponding descriptor comprises a plurality of subdescriptors, each subdescriptor relating to at least one dominant colour in the corresponding query or reference image, the method comprising deriving the matching value by considering a subset of the dominant colours in either the query or reference descriptor or both using a subdescriptor of either the query descriptor or the reference descriptor or both.

## Description

The present invention relates to a method and apparatus for matching, searching for and retrieving images, especially using colour.

Searching techniques based on image content for retrieving still images and video from, for example, multimedia databases are known. Various image features, including colour, texture, edge information, shape and motion, have been used for such techniques. Applications of such techniques include Internet search engines, interactive TV, telemedicine and teleshopping.

For the purposes of retrieval of images from an image database, images or regions of images are represented by descriptors, including descriptors based on colours within the image. Various different types of colour-based descriptors are known, including the average colour of an image region, statistical moments based on colour variation within an image region, a representative colour, such as the colour that covers the largest area of an image region, and colour histograms, where a histogram is derived for an image region by counting the number of pixels in the region of each of a set of predetermined colours. Examples of documents concerned with indexing of images for searching purposes and similar techniques include US 6,070,167, US 5,802,361, US 5,761,655, US 5,586,197 and US 5,526,020.

WO 00/67203, the contents of which are incorporated herein by reference, discloses a colour descriptor using Gaussian models of the colour distribution in an image. The dominant colours in an image or image region are identified (for example using a histogram), and for each dominant colour, the colour distribution in the vicinity of the dominant colour in colour space is approximated by a Gaussian function. The mean, variance and covariances (for the colour components in 3-D colour space) of the Gaussian function for each dominant colour are stored as a colour descriptor of the image region, together with weights indicating the relative proportions of the image region occupied by the dominant colours. The Gaussian functions together form what is known as a Gaussian mixture of the colour distribution. When searching a database containing descriptors of stored database descriptors using a query image, first a descriptor of the query image is derived in a similar manner. The query descriptor is compared with each database descriptor to determine the similarity of the descriptors and hence the similarity of the query image with each database image. The comparison involves determining the similarity of the Gaussian mixtures of the query and database descriptors by making a similarity or distance error measurement, or in other words by measuring the degree to which the Gaussian mixtures overlap. WO 00/67203 gives examples of specific functions that can be used to determine a similarity or distance error measurement.

Poor retrieval performance may occur in retrieval using the prior art methods because a query descriptor or a database descriptor or both may contain additional information that is not of interest to the searcher or may lack some information that is of interest. This can depend, for example, on how the searcher inputs the query image, or on how images in the database have been segmented for indexing. For example, a searcher may input a query image which contains a person in a blue shirt carrying a red suitcase, but he is only interested in any images containing the blue shirt and is not concerned with the red suitcase. On the other hand, an object in a database image may have been segmented with pixels that do not belong to the object of interest, or with another object. Further, either a query image or a database image may include only part of an object of interest, with part of the object occluded or out of the image.

Similarly, problems can occur when there are dynamic changes, for example, when a sequence of images are stored in the database. For example, if a red book is passed from one person to another in a sequence of images, a search based on one of the images might not retrieve the other images in the sequence. Likewise, certain types of noise can reduce matching efficiency. For example, if a blue object became covered in red spots, a search for the blue object might fail to retrieve that image.

All of the above can reduce the accuracy and completeness of the search.

Throughout this specification, references to an image include references to a region of an image such as a block of an image or an object or objects in an image, or a single colour or group of colours or colour distribution(s).

A first aspect of the invention provides a method of searching for an image or images corresponding to a query comprising comparing a colour descriptor of the query with stored colour descriptors of each of a collection of reference images, and deriving a matching value indicating the degree of matching between the query and a reference image using the query and reference descriptors, and classifying the reference images on the basis of said matching value, each colour descriptor including an indication of one or more dominant colours within the corresponding query or reference image, wherein at least one of the query descriptor and a reference descriptor indicates two or more dominant colours, so that the corresponding descriptor comprises a plurality of subdescriptors, each subdescriptor relating to at least one dominant colour in the corresponding query or reference image, the method comprising deriving the matching value by considering a subset of the dominant colours in either the query or reference descriptor or both using a subdescriptor of either the query descriptor or the reference descriptor or both.

The method classifies the reference images, for example, as relevant or not relevant, or may order the reference images, for example by the matching value. The method may characterise or classify the reference images in other ways using the matching value.

Another aspect of the invention provides a method of searching for an image or images corresponding to a query by comparing a descriptor of the query with stored descriptors of each of a collection of reference images, the method comprising deriving a measure of the similarity between a query and a reference image by matching only part of the query descriptor with the whole or part of the reference descriptor or by matching only part of the reference descriptor with the whole or part of the query descriptor.

Preferred features of the invention are set out in the dependent claims, which apply to either aspect of the invention set out above or in the other independent claims.

The methods are carried out by processing signals corresponding to the image. The images are represented electronically in digital or analog form.

Although the invention is mainly concerned with classification on the basis of colour, or spectral components of a signal such as other electromagnetic radiation which can be used to form images, the underlying principle can be applied, for example, to image descriptors which include descriptions of other features of the image such as texture, shape, keywords etc.

As a result of the invention, more thorough and accurate searches can be carried out. The invention also improves robustness of the matching to object occlusion, certain types of noise and dynamic changes. Also, the invention can compensate for imprecision or irregularities in the input query or in the indexing of the database images. Thus, the invention can overcome problems associated with the fact that the input query and the indexing of database images are usually dependent on human input and thus are to some extent subjective. The invention is especially useful in applications using the theory of the MPEG-7 standard (ISO/IEC 15938-3 Information Technology --Multimedia Content Description Interface -- Part 3 Visual).

An embodiment of the invention will be described with reference to the accompanying drawings of which:
Fig. 1 is a block diagram of a system according to an embodiment of the invention;
Fig. 2 is a flow chart of a search routine according to an embodiment of the invention;
Fig. 3 shows a database image including a segmented group of objects and an image of one of the segmented objects;
Fig. 4 is a schematic illustration of a query descriptor and a database descriptor;
Fig. 5 is a schematic illustration of another query descriptor and a database descriptor.

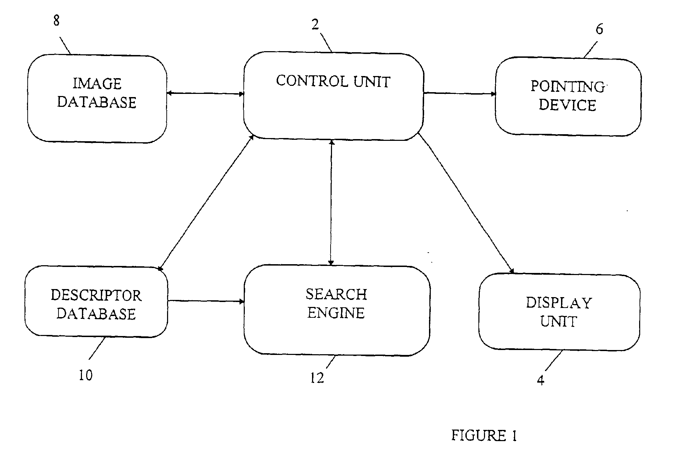

A system according to an embodiment of the invention is shown in Fig. 1. The system includes a control unit 2 such as a computer for controlling operation of the system, a display unit 4 such as a monitor, connected to the control unit 2, for displaying outputs including images and text and a pointing device 6 such as a mouse for inputting instructions to the control unit 2. The system also includes an image database 8 storing digital versions of a plurality of reference or database images and a descriptor database 10 storing descriptor information, described in more detail below, for each of the images stored in the image database 8. Each of the image database 8 and the descriptor database 10 is connected to the control unit 2. The system also includes a search engine 12 which is a computer program under the control of the control unit 2 and which operates on the descriptor database 10.

In this embodiment, the elements of the system are provided on a single site, such as an image library, where the components of the system are permanently linked.

The descriptor database 10 stores descriptors of all the images stored in the image database. More specifically, in this embodiment, the descriptor database 10 contains descriptors for each of a plurality of regions of each image. The regions may be blocks of images or may correspond to objects in images. The descriptors are derived as described in WO 00/67203. More specifically, each descriptor for each image region has a mean value and a covariance matrix, in RGB space, and a weight for each of the dominant colours in the image region. The number of dominant colours varies depending on the image region and may be equal to 1 or more.

The user inputs a query for searching. The query can be selected from an image or group of images generated and displayed on the display unit 4 by the system or from an image input by the user, for example, using a scanner or a digital camera. The system can generate a selection of images for display from images stored in the database, for example, in response to a keyword search on a word input by the user, such as "leaves" or "sea", where images in the database are also indexed with keywords. The user can then select the whole of a displayed image, or a region of an image such as an object or objects. The desired region can be selected using a mouse to ring the selected area. Alternatively, the user could generate a query such as a single colour query using a colour wheel or palette displayed by the system. In the following, we shall refer to a query image, although the term query image can refer to the whole of an image or a region of an image or an individual colour or colours generated or selected by the user.

A colour descriptor is derived from the query image in the same way as for the database descriptors as described above. Thus, the query image is expressed in terms of dominant colours and means and covariance matrices and weights for each of the dominant colours in the query image, or in other words by deriving a Gaussian mixture model of the query image.

The search engine 12 searches for matches in the database by comparing the query descriptor with each database descriptor and deriving a value indicating the similarity between the descriptors. In this embodiment, similarity measurements are derived by comparing Gaussian mixture models from the query and database descriptors, and the closer the similarity between the models, or in other words, the greater the overlap between the 4D volume under the Gaussian surfaces (in 3-D colour space), the closer the match. Further details of specific matching functions are given in WO 00/67203, although other matching functions may be used.

In addition to or instead of comparing the full query and database descriptors, the present embodiment performs comparisons using subdescriptors of either the query descriptor or database descriptor or both. Comparisons using subdescriptors are carried out in essentially the same way as for full descriptors as described above using the same matching function. An explanation of the term subdescriptor is given below.

Suppose for any query or database descriptor there are n dominant colours, so that there are n collections of mean values and covariance matrices. In the following, each mean value and covariance matrix for each dominant colour is called a cluster. Thus, if there are n dominant colours in a descriptor, there are n clusters, and the descriptor can be viewed as a set of clusters. More generally, any subset of the set of clusters can be viewed as a subdescriptor of the image region.

The system is set up to offer four different types of search, explained in more detail below. The different possible search methods are displayed on the display unit 4 for selection by the user.

The four different types of search are categorised generally as set out below. Using set-theory terms, for a query descriptor Q and a database descriptor D, the types of search methods can be defined generally as follows:
Type 1: Q is compared with D
Type 2: Q is compared with d, where d ⊆ D
Type 3: q is compared with D, where q ⊆ Q
Type 4: q is compared with d, where d ⊆ D and q ⊆Q

Here the symbol ⊆ means *"is a subset of"* and hence d and q refer to subsets, or subdescriptors of D and Q.

The different types of search can be expressed in words as follows:
Type 1: Compare the query descriptor with one in the database using the whole of both descriptors
Type 2: Compare the query descriptor with one in the database using the whole of the query descriptor using only part of the database descriptor.
Type 3: Compare the query descriptor with one in the database using only part of the query descriptor but using the whole of the database descriptor.
Type 4: Compare the query descriptor with one in the database using only part of the query descriptor and only part of the database descriptor.

The Type 1 method is as disclosed in WO 00/67203 and discussed briefly above.

The Type 2 method compares the query descriptor with subdescriptors of each database entry. More specifically, in this embodiment, all the subdescriptors of each database descriptor are used. Thus, for a descriptor having n clusters, all possible 1-cluster, 2-cluster, 3-cluster etc up to n-1 cluster subdescriptors are formed and compared with the query descriptor, and similarity measures are derived for each comparison.

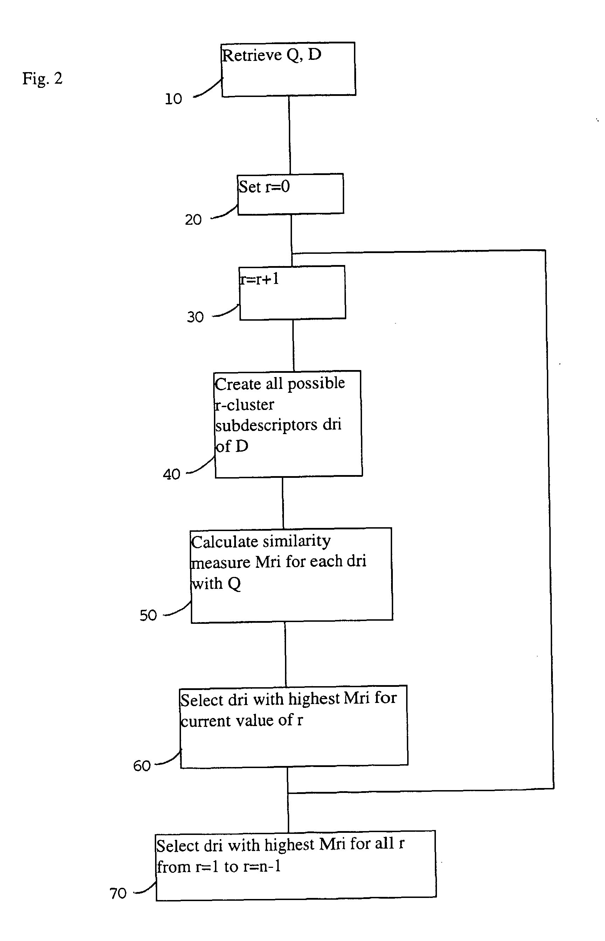

Fig. 2 is a flow chart illustrating part of a Type 2 searching method for a query descriptor Q and a database descriptor D.

In step 10, the query descriptor and a database descriptor D are retrieved. In step 20, r is set to 0 to begin the matching. At step 30, r is increased by 1. Then all possible r-cluster subdescriptors di of D are created, in step 40. In step 50, a similarity measure Mri is calculated for each subdescriptor dri. In step 60, the subdescriptor dri which has the highest value of Mri is selected and stored. (Here we are assuming that the matching function used is such that a higher similarity measure indicates a closer match.). Then the flow chart loops back to step 30, r is increased by 1, and steps 40 to 60 are repeated for the next size up of subdescriptors. After all possible subdescriptors d have been compared with Q, the subdescriptor d with the highest value of M for all values of r is selected and stored.

Steps 10 to 70 are repeated for each descriptor D in the database. Then, the values of M for all the descriptors are ordered, and the database images corresponding to the highest values of M are displayed. The number of images displayed can be set by the user. Images with lower values of M can be displayed in order on selection by the user, in a similar way to display of search results as in internet text-based search engines.

In the above example, the higher the similarity measure, the closer the match. Of course, depending on the matching function used, a closer match may correspond to a smaller value, such as a smaller distance error. In that case, the flow chart is altered accordingly, with the subdescriptor with the smallest matching value being selected.

Additionally, the matching value derived in step 70 may be compared with a threshold. If the matching value is greater or less than the threshold, as appropriate, then the subdescriptor, and the corresponding database descriptor and image, may be excluded as being too far from being a match. This can reduce the computation involved.

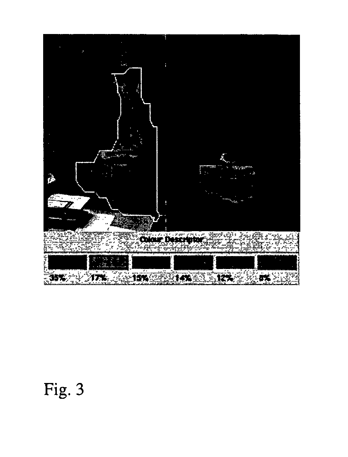

This type of search method would be useful in the following scenario. Assume that the operator wishes to search for all records in a video database that contain a particular orange-coloured object. The operator may have generated a single coloured query or may only have a query descriptor that describes the orange object segmented by itself. The operator wishes to find a record in the database that contains this orange object regardless of whether the database descriptor for the record also contains colours of other objects or regions of the scene that have been jointly segmented with the orange object. Such joint segmentation could occur, for example, because the segmentation process was unable to separate the orange object from certain other parts of the scene. Hence for the database entry, the orange object may not necessarily be segmented by itself but instead be part of a larger segmented region. In order to match a query for an orange object with such a database entry, it is necessary to consider subsets of the database descriptors since only a subset of their constituent clusters may pertain to the orange object. Fig. 3 shows an example of such a situation, where the database descriptor relates to the segmented region outlined in white on the left which includes a human and a toolbox, whereas the user is only interested in the toolbox, and input a query focussed on the toolbox. For example, the user may have input a query similar to that shown on the right in Fig. 3. Here, the orange object (the toolbox) is represented by only two clusters (the third and the fifth) out of the six clusters that comprise the full descriptor for the segmented region on the left in the database record.

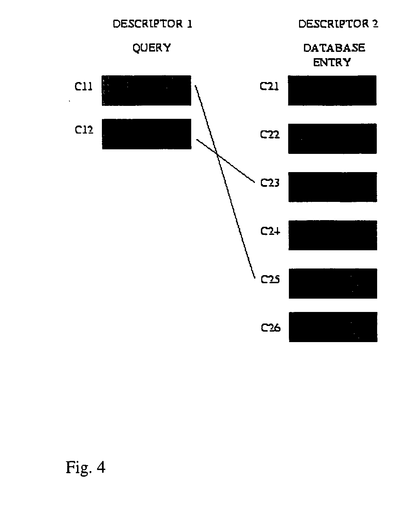

In this scenario it is assumed that the operator has created a query descriptor that is comprised of two orange clusters and it is desirable for a search to result in this two-cluster query descriptor being matched with [part of] the six-cluster descriptor of the database record, as shown in Figure 4. In Figure 4 the query has only two clusters, C11 and C12, and it represents the whole of orange object but nothing more. Likewise only clusters C23 and C25 in the database entry refer to the orange object.

Suppose the query descriptor contains 2 clusters, corresponding to 2 dominant colours. If there is an image identical to the query image in the database, then it would be sufficient to compare the query descriptor only with each of the 2-cluster subdescriptors in each image in the database to retrieve that image. However, the database may not contain an identical image, and also the searcher may be seeking several images similar to the query image and is not limited to an identical image. In this case, it is appropriate to search on all m-cluster subdescriptors. The computational load in the Type 2 method can be quite high, but it leads to better results.

The Type 3 method is the converse of the search method type 2. Thus, for a query descriptor having n clusters, a database descriptor is compared with all 1-cluster descriptors up to n-1 clusters. The flow chart for a Type 3 method is the same as for the Type 2 method shown in Fig. 2, except that in step 40, r-cluster subdescriptors of Q are compared with D.

The Type 3 method could be of use for example, where the user wished to do an OR search. If the query descriptor describes a segmented region which includes two objects, for example a person in a blue shirt AND an orange suitcase (being carried by the person), then the aim could be to find all images that contain *either* a blue shirt *or* an orange box *or* both. Another example where this method would be useful is when the query descriptor describes the complete object but where the database record descriptor was formed from an *occluded* view of the object. Hence the occluded object descriptor D may match with a *subset* q of the query descriptor even though it does not match with Q.

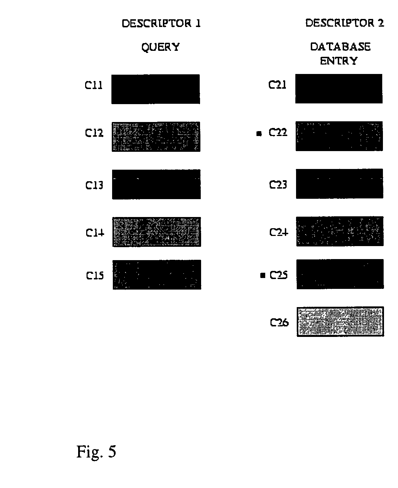

Here another example is given. This illustrates that the number of clusters in the orange object query does not have to equal the number of orange object clusters in the subdescriptor of the matching database record. Consider the scenario where the operator has a five-cluster query descriptor of the orange object, obtained from an image where the box was cleanly segmented by itself. (One reason for it having so many clusters could be shadowing causing different parts of the object to be duller, appearing more brown than orange in colour.) In this scenario it would be desirable for the whole of the five-cluster query to match with [part of] the six-cluster database record, where the database record has only two of its clusters representing the orange object, as before. Fig. 5 represents shows the colour descriptors for this situation, where the square black dots indicate the clusters of the database descriptor that comprise the best-matching subdescriptor d.

The Type 4 method involves comparing subdescriptors of the query descriptor with subdescriptors of the database descriptor. The following is an example, where the Type 4 method could be useful. Assume that the query descriptor for a tricoloured suitcase coloured red, yellow and green, has one colour cluster missing and that a database image of the suitcase has one of the other colour clusters missing. This might be due to occlusion, where one part of the suitcase is occluded in the query image and another part of the suitcase is occluded in the database image. In order for the matching process to match these two descriptors, it would be necessary to consider subsets, or subdescriptors, of each descriptor, and compare those for a match. Clearly, the Type 4 method can result in very many records matching the query, and so this method would generally only be used when a very thorough search was desired.

In all four of the search method types, the weights of the clusters within the descriptor can either be used or ignored. If they are used, then the search is more likely to result in a match that is closer to the query since it will aim to find database records that have colours distributed in the same ratios. This can be explained using the following example. Assume that an object has the following ratios of colours: 18% white, 30% grey, 40% blue and 2% orange, where grey corresponds say to the face of a cartoon character and the orange corresponds to the characters hat. The colours of the object are represented by a descriptor of four clusters with each cluster having a suitable mean and spread.

If the database contained an occluded view of this object, for example just the face and hat, then it would be useful to use the ratio of grey(face) to orange(hat) of, for example, 30:2. This would then make it less likely to find unwanted objects of similar colour but of different colour ratios, such as a basket ball which is 98% orange and 2% grey. Hence using the weights of a perfectly segmented example query of the cartoon character could improve matching. Alternatively, if the user purely wanted to find all objects coloured orange and grey, then discarding the weights would be beneficial. If the weights are not required, then all the clusters (in both the query and the database descriptor) are simply assigned the same weight and the matching function is applied to the normalized Gaussians constructed from such clusters. Thus, if it is desired to find simply objects containing colours in any proportions then the weights should obviously be ignored.

The above discussion assumes that the descriptors are essentially as described in WO 00/67203. However, the method of the invention can be used with other types of descriptors. For descriptors as in the embodiment, it is not essential to use the covariance matrix, and the search could be based simply on the dominant colours, although obviously this would probably give less accurate results and a much higher number of images retrieved.

A system according to the invention may, for example, be provided in an image library. Alternatively, the databases may be sited remote from the control unit of the system, connected to the control unit by a temporary link such as a telephone line or by a network such as the Internet. The image and descriptor databases may be provided, for example, in permanent storage or on portable data storage media such as CD-ROMs or DVDs.

In the above description, the colour representations have been described in terms of red, green and blue colour components. Of course, other representations can be used, including other well known colour spaces such as HSI, YUV, Lab, LMS, HSV, or YCrCb co-ordinate systems, or a subset of colour components in any colour space, for example only hue and saturation in HSI. Furthermore, the invention is not limited to standard colour trichromatic images and can be used for multi-spectral images such as images derived from an acoustic signal or satellite images having N components corresponding to N spectral components of a signal such as N different wavelengths of electromagnetic radiation. These wavelengths could include, for example, visible light wavelengths, infra-red, radio waves and microwaves. In such a situation, the descriptors correspond to N-dimensional image space, and the "dominant colours" correspond to the frequency peaks derived from counting the number of occurrences of a specific N-D value in the N-D image space.

Descriptors can be derived for the whole of an image or sub-regions of the image such as regions of specific shapes and sizes. Alternatively, descriptors may be derived for regions of the image corresponding to an object or objects, for example, a car, a house or a person. In either case, descriptors may be derived for all of the image or only part of it.

In the search procedure, the user can input a simple colour query, select a block of an image, use the pointing device to describe a region of an image, say, by outlining or encircling it, or use other methods to construct a query colour, colours, or colour distribution(s).

In the embodiment, 4 types of matching methods are available. It is not necessary to make available or use all 4 methods and any one or more may made available by the system, according to capacity of the system, for example. The matching methods may be combined, for example, the Type 1 method may be combined with one or more of the Type 2, Type 3 or Type 4 methods. The system may be limited to certain types of methods according to the computational power of the system, or the user may be able freely to choose.

Appropriate aspects of the invention can be implemented using hardware or software.

In the above embodiments, the component sub-distributions for each representative colour are approximated using Gaussian functions, and the mean and covariance matrices for those functions are used as descriptor values. However, other functions or parameters can be used to approximate the component distributions, for example, using basis functions such as sine and cosine, with descriptors based on those functions. It is not necessary to include weights in the descriptors. Weights may or may not be used in the matching procedure. The weights in a subdescriptor may be set to the same value, or adjusted to compensate for the omission of other clusters.

## Claims

1. A method of searching for an image or images corresponding to a query comprising comparing a colour descriptor of the query with stored colour descriptors of each of a collection of reference images, and deriving a matching value indicating the degree of matching between the query and a reference image using the query and reference descriptors, and classifying the reference images by said matching value, each colour descriptor including an indication of one or more dominant colours within the corresponding query or reference image, wherein at least one of the query descriptor and a reference descriptor indicates two or more dominant colours, so that the corresponding descriptor comprises a plurality of subdescriptors, each subdescriptor relating to at least one dominant colour in the corresponding query or reference image, the method comprising deriving the matching value by considering a subset of the dominant colours in either the query or reference descriptor or both using a subdescriptor of either the query descriptor or the reference descriptor or both.

2. A method as claimed in claim 1 wherein the query has a plurality of dominant colours so that the query descriptor has a plurality of subdescriptors.

3. A method as claimed in any preceding claim wherein the colour descriptors contain for each dominant colour an indication of the spread of colour in the image in colour space centred on the dominant colour, and matching is performed using said indications of colour spread.

4. A method as claimed in any preceding claim wherein the colour descriptors include a weight indicating the proportion of the image occupied by each dominant colour or ratios of dominant colours, and the weights are used in deriving the matching values.

5. A method as claimed in any preceding claim wherein the colour descriptors use Gaussian models of the colour distributions in the corresponding query or reference images.

6. A method as claimed in claim 5 wherein the Gaussian models are based on means corresponding to dominant colours and variances corresponding to the colour distribution centred on said dominant colours.

7. A method as claimed in any preceding claim wherein the query descriptor is compared with one or more subdescriptors of the reference descriptor.

8. A method as claimed in claim 7 wherein the query descriptor is compared with each subdescriptor of the reference descriptor.

9. A method as claimed in any preceding claim wherein the reference descriptor is compared with one or more subdescriptors of the query descriptor.

10. A method as claimed in claim 9 wherein the reference descriptor is compared with each subdescriptor in the query descriptor.

11. A method as claimed in any preceding claim wherein at least one subdescriptor of the query descriptor is compared with at least one subdescriptor of the reference descriptor.

12. A method as claimed in claim 11 wherein each subdescriptor of the query descriptor is compared with each subdescriptor of the reference descriptor.

13. A method as claimed in any preceding claim wherein at least one subdescriptor corresponds to two or more dominant colours.

14. A method as claimed in any preceding claim wherein the query descriptor and the reference descriptor have different numbers of subdescriptors.

15. A method as claimed in any preceding claim wherein the descriptors are expressed in terms of 3-D colour space.

16. A method of searching for an image or images corresponding to a query by comparing a descriptor of the query with stored descriptors of each of a collection of reference images, the method comprising deriving a measure of the similarity between a query and a reference image by matching only part of the query descriptor with the whole or part of the reference descriptor or by matching only part of the reference descriptor with the whole or part of the query descriptor.

17. A method as claimed in claim 16 wherein the reference images are N-dimensional images derived from M different spectral components of a signal.

18. A method as claimed in claim 17 wherein the images are derived from wavelengths of visible light.

19. Apparatus adapted to implement a method according to any preceding claim.

20. Apparatus as claimed in claim 19 comprising a database for storing descriptors of reference images, means for selecting a query image, means for deriving a descriptor of a query image, and means for comparing a query descriptor with a reference descriptor.

21. A computer program for implementing a method as claimed in any one of claims 1 to 18.

22. A computer-readable medium storing computer-executable process steps for implementing a method as claimed in any one of claims 1 to 18.
